# EUROPEAN PATENT APPLICATION

(11) **EP 4 002 254 A1**
(43) Date of publication of application: **25.05.2022**
(21) Application number: 21208431.3
(22) Date of filing: 16.11.2021
(51) Int. Cl.: G06Q 30/02

(54) **INTERCONNECTION METHOD FOR USERS AND DATA AND RELATED SYSTEM**

(30) Priority: 16.11.2020 IT 202000027417
(71) Applicant: Roundabout S.r.l., 10129 Torino (TO) (IT)
(72) Inventor: MONTEMURRO, Antonio, 75100 Matera (MT) (IT); DI LECCE, Ilaria, 10129 Torino (TO) (IT)
(74) Representative: Giuliano, Natalia

(57) **Abstract**

Interconnection method for users and data (100) for a promotional campaign realization, comprising the steps:
- (101) of outlining subjects involved and of classifying them in: a company user, a promoter user, or influencer user, an administrator user;
- (102) of profiling the company user and (103) the influencer user;
- (104) of entering data to be shared in the company profile;
- (105) of cross-checking a company profile (200) with at least an influencer profile;
- (106) of sending to the company profile (200) and to the influencer profile a request for approval of a promotional campaign;
- (107a) of creating content if the request has been approved and (108) of publishing it on an influencer user's social profile;
- (109) of verifying the effectiveness of the publishing;
- (110) of viewing data relating to pre-established contents of a company;
- (111) of paying a fee.

## Description

The present invention relates to an interconnection method for users and data.

Furthermore, the present invention relates to a system for the implementation of the interconnection method for users and data.

In particular, the present invention relates to an interconnection method for users and data, of the type that can be used for the realization of an optimized promotion campaign or network, of products and services.

As is known, the spread of systems and platforms for the promotion and offer of products and services is a phenomenon in constant growth. An example of a method and platform for the interconnection of users and data is described in patent ITRM20110366A1 which concerns a system capable of allowing, in a technically reliable, versatile, fast, simple and economical way, the creation, execution, and management of highly interactive Internet promotional activities by users. The system may include at least one device of a company promoting a promotional campaign, which includes processing and communication means to connect to a communications network. The device consists of a client computer. The processing means are adapted to execute a software module for the realization of interactive graphic interfaces preferably comprising drag and drop mechanisms. A second example of an interconnection method and platform for accessing a user to predefined services is described in patent application ITBG20120036A1, which concerns a method of access by a user to predefined services, linked to proximity marketing, which exploits technologies of visual and mobile communication to promote the sale of products and services. The purpose of the method described is pursued through the steps of equipping a user with a terminal, associating a wireless access point to an activity, bringing the user closer to the aforementioned access point to which the terminal is connected, subsequently connected to a network and redirected to a site associated with the activity on the network, and finally access the services offered by the site. The application fields of the system described can pertain to multiple product categories: shops, automotive, exhibition stands, exhibitions, museums, personal services and public services, and many others.

Although useful in many respects, the methods of interconnection of users and data and the electronic interconnection platforms currently known do not allow a user to customize the interconnection parameters according to their needs, in terms of type of promoter or type of data or product to be promoted to selected end users, in order to optimize communication.

The purpose of the present invention is to provide an interconnection method for users and data and a relative electronic platform, of the type that can be used for the creation of networks for the targeted promotion of products or services, which allows a user to customize the parameters according to their needs of interconnection, in terms of type of promoter or type of data or product to be promoted to selected end users, therefore having characteristics such as to overcome the limits that still influence the methods of interconnection of users and data with reference to the known art.

A further purpose of the present invention is to provide an interconnection method for users and data and a related platform, such as to allow a user to track the effectiveness of the communication of their data in real time.

According to the present invention, an interconnection method for users and data is realized, as defined in claim 1.

According to the present invention, an interconnection system for users and data is realized, as defined in claim 7.

For a better understanding of the present invention, a preferred embodiment is now described, purely by way of non-limiting example, with reference to the attached drawings, in which:
- Figure 1 shows a schematic diagram of an interconnection method for users and data, according to the invention;
- Figure 2 shows a schematic view of the user and data interconnection system, according to the invention.

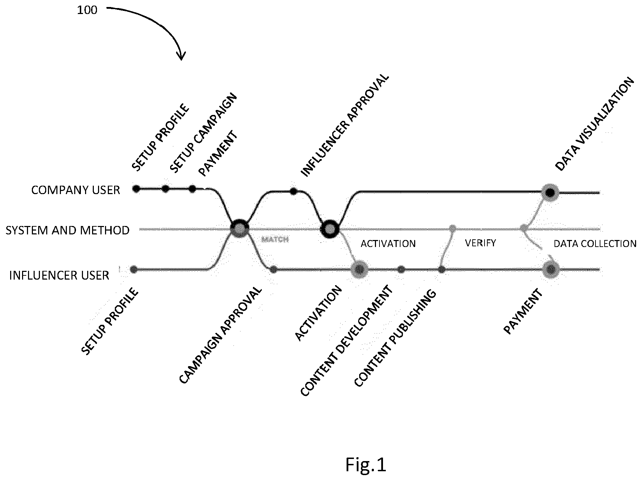

In particular, in Figure 1, an interconnection method 100 for users and data is shown, according to the invention.

More specifically, the interconnection method 100 for users and data comprises the following steps:
- 101 of outlining the subjects involved, acquiring the data through an electronic platform, and of classifying them in: at least one company user, at least one promoter user, or influencer, an administrator user;
- 102 of profiling at least one company user, obtaining at least one company profile;
- 103 of profiling at least one influencer user, obtaining at least an influencer profile;
- 104 of inserting in the company profile some data to be shared, chosen from the group: audiovisual messages; photos; information on the audience you want to reach; specifications on the products or services that you want to promote; descriptive and temporal information that allows the influencer to create the content that is the subject of the promotion; customized elements to be included in the contents (tags, hashtags, links, geotags); number of contents to request; number of influencers to hire; promotional budget; promotional goal; achievable results; payment specifications; location of the promotion;
- 105 of cross-checking a company profile 200 with at least one influencer profile 300a, 300b, 300c ... 300n based on data entered in the profiling phases 102, 103, obtaining a match between at least one company 200 and at least one influencer 300a, 300b, 300c ... 300n;
- 106 of sending to the at least one company 200 and at least one influencer profile 300a, 300b, 300c ... 300n corresponding to the match of step 105, a request for approval of the promotional campaign;
   - 107a of creating content based on the data entered in step 104, if at least one company 200 and at least one influencer profile 300a, 300b, 300c ... 300n approve the request sent in step 106;
- 107b of carrying out a second cross-checking step of at least one profile of the company 200 with at least one influencer profile 300a, 300b, 300c ... 300n if the request sent in phase 106 has been rejected, excluding the influencer profiles that have not been approved or that have not approved the request in the previous phase 106;
- 108 of publishing content on at least one social profile of at least one influencer user;
- 109 of verifying the effectiveness of the publication of content published by each influencer user in step 108 and of storing the data on a server;
- 110 of viewing the data relating to pre-established contents of a company on the associated company profile;
- 111 of paying a fee to at least one influencer on whose social profile data within predetermined numerical and qualitative parameters have been verified in phase 109.

Phase 101, in particular, consists in acquiring, through an IT platform, the data entered by the subjects involved and relating to the subjects themselves. The subjects involved then access the platform and are asked to enter a series of n data. An example of data is the company name, name, interests, purpose of registration, etc. The data entered by the parties involved are stored in a first database.

According to an aspect of the invention, step 104 uses data present on internet, so the data shared in the company profile are automatically retrieved online.

According to an aspect of the invention, the interconnection method 100 also comprises, before step 101, a further step 101a of generating a campaign strategy based on information retrieved online by the company (target audience, promotional activity completed on the various online platforms, results achieved, top performer channels, average budget spent, average costs for acquisition and interaction, SWAT data on products and services) and current trend data (company industry trends, trends within the community of influencers, trends within the interconnection method 100 on the best performing compositions based on the type of company and sales channel).

According to an aspect of the invention, the step 105 of cross-checking a company profile (200) with at least an influencer profile (300a,300b,300c... 300n) is based on data entered in profiling steps 102, 103, and the further step 101a.

According to an aspect of the invention, the step 109 of verifying the effectiveness of the publication of content published by each influencer user in step 108 and of storing the data on a server, is implemented by artificial intelligence method (AI).

According to an aspect of the invention, the implementing method 100 comprises a step 120, after the step 111, of generating a new campaign strategy based on the further step 101a integrated with the data obtained from step 110 and of starting a new campaign optimized in terms of parameters and structure through self-learning.

Step 101 also includes classifying the subjects involved based on the acquired data, creating the following subgroups or profiles:
- company user:
- promoter user, or influencer;
- an administrator user.

Each sub-group or profile is characterized by a list of subjects involved having some certain data in common (for example the purpose of the registration).
According to an aspect of the invention, step 103 of profiling at least one influencer user comprises the request for data selected from the group:
- Number of channels (greater than 3, 2 or 1);
- Number of contacts in a predefined social media (> 1 million, between 500 thousand and 1 million, between 100 thousand and 500 thousand, between 2 thousand and 100 thousand);
- Area (global, continent, nation or city of reference);
- Reference sector, chosen from a list and compared to an algorithmic analysis of the images / videos published, by hashtags, tags, geotags, links, words, emoticons inserted in the contents of the influencer's channels, the audience that follows him and the contents with which the influencer and those who follow him interact;
- Target audience defined on the basis of parameters of age, sex, location, behavioral characteristics, average expenditure, categories of interest, companies of interest / contact / interaction, target audience);
- Promotional activities already carried out defined on the basis of parameters including company name, category, time reference, results obtained, budget received, social channel of application, public characteristics reached;
- Average, individual and overall performance of the social channels and the respective published content;
- Content that obtained the best and worst results (what are the contents, the results, the time references, and the specifics on the audience that interacted);
- Overall analysis metrics of promotional effectiveness defined on the basis of parameters including: Percentage of completion, Open rate, Engagement rate, Visibility frequency, Attractiveness, Traffic generated by the profile, Call to action rate, Skip-rate, Replay- rate, Loss of visibility, Frequency of visibility.

Furthermore, the step 102 of profiling at least one company user includes the request, compilation and saving of data selected in the group:
- information relating to the company user including: name, billing data, headquarters;
- information relating to at least one reference user of the company profile, called information including: name, surname, email and telephone number;
- Classification of products or services to be proposed based on data of: type of activity, categories connected to the company's activity, distinctive elements of the services / products, strengths of the services / products, description of the services or products of the company;
- area of interest, including city, region / s, nation / s or distance in km from the company headquarters;
- End user target including data relating to: age, sex, location, behavioral characteristics, average expenditure
- promotional campaigns already implemented (type, time frame, results obtained, budget invested, impact of the investment on online and offline performance)
- References on the company's digital presence (company social account names);
- History of the average performance of the individual social accounts achieved in the last two years and also shown daily (fanbase size, size of accounts followed, number of contents, profile interactions, content interactions);
- Verification of the potential use of activities or tools designed to alter the performance of the respective social channels;
- Information on local, national and international competitor companies (names, area of expertise, average results, networks, social channels, contents, promotional activities).

According to an aspect of the invention, step 109 of verifying the effectiveness of the publication of content published by each influencer user includes detecting and storing, in real time, data relating to:
- Media content (image or video);
- Copy of the content (text);
- Publication time;
- Number of individual users who viewed the content;
- Number of times the content has been viewed by individual users;
- Public interactions with the content (tap, view profile, click on link, share, save, direct, replies, like / like, comments, calls, emails, clicks on the website, follow, unfollow, follow, unfollow, number of video views, retweets);
- Overall analysis metrics of promotional effectiveness (Percentage of completion, Open rate, Engagement rate, Visibility frequency, Attractiveness, Traffic generated by profile, Call to action rate, Skip-rate, Replay-rate, Decrease in visibility, Frequency visibility);
- List of accounts that have interacted with the contents;
- Time flow of the development of previous data (single and aggregate data);
- Comparison of data with those obtained in previous promotions with evidence of the best and worst metrics;
- Channels, contents, times and days of publication that gave the best and worst results;
- Comparison of the data obtained with those of competitors (local, national, international).

In particular, the overall promotional effectiveness analysis metrics are calculated based on:
- Percentage of completion or Open rate calculated as final Reach * 100 / initial Reach;
- Engagement rate by Content calculated as TOT content interactions / Reach content * 100;
- Visibility frequency calculated as Average impression / Average reach;
- Attractiveness calculated as Average profile impression / Average profile visits;
- Traffic generated by the profile calculated as Average profile visits;
- Call to action rate calculated as Average story interactions / Average reach story * 100;
- Skip-rate calculated as "Next story" average + "Releases" average * 100 / initial Reach;
- Replay-rate calculated as N° answers / Reach * 100;
- Loss of visibility calculated as 100 - Average Reach today * 100 / Average Reach 30 days earlier.

Advantageously according to the invention, the method favors both influencer users, thanks to credits and concessions associated with the published content, and company users thanks to the optimization of the visibility provided.

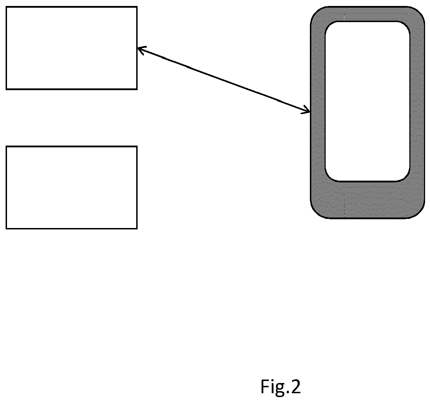

As shown in Figure 2, the user and data interconnection system suitable for implementing the interconnection method (100) comprises:
- At least one mobile device with internet connection;
- at least one server comprising at least a first and a second database;
- At least one electronic platform for the interconnection of users and data accessible through an app installed on at least one mobile device.

The electronic platform includes at least a first data entry block, at least one section dedicated to a company profile, at least one section dedicated to an influencer profile, at least one crossing block of at least one company profile with at least one influencer profile, based on data inserted in the respective profiles and through Artificial Intelligence methods; an upload section of at least one promotion; a control panel for the effectiveness of the promotion.

Therefore, the method and system according to the invention allow a promotional format that can guide the choice, management and monitoring of a promotional campaign customized according to your specific needs using the best performing medium for your sector, i.e. an influencer profile on a predefined social network.

Advantageously, the method and the platform according to the invention allow to select, manage and monitor a promotional campaign in a completely automated and optimized way through artificial intelligence and deep learning algorithms capable of selecting the best strategic path, allowing to predict the result even on the basis of the historical results and strategies of the users involved, or rather of statistical models and social network analysis through which it is possible to carry out an intelligent categorization and evaluate the "Brand Affinity".

Advantageously, the method according to the invention by applying Artificial Intelligence methods allows to carry out an accurate analysis of profiles and contents, using the most innovative techniques of Natural Language Understanding and Image Recognition.

Advantageously, the method according to the invention is also able to identify users who make use of fraudulent practices and to perform actions in relation to the result of the verification.

Advantageously, the method and the platform are designed to be accessible also at an economic level and with a company-influencer match algorithm that analyzes and profiles the performance of both channels and matches them according to the relevant metrics.

Finally, it is clear that modifications and variations may be made to the method of interconnection of users and data and the related system described and illustrated here without thereby departing from the protective scope of the present invention, as defined in the attached claims.

## Claims

1. Interconnection method (100) for users and data for a promotional campaign realization, comprising the following steps:
- (101) of outlining subjects involved by acquiring data through an IT platform, and of classifying said subjects in: at least one company user, at least one promoter user, or influencer user, an administrator user;
- (102) of profiling, through acquired data, at least one company user, obtaining at least one company profile;
- (103) of profiling , through acquired data, at least one influencer user, obtaining at least one influencer profile;
- (104) of entering data to be shared in the company profile;
- (105) of cross-checking a company profile (200) with at least an influencer profile (300a, 300b, 300c... 300n) based on data entered in profiling steps (102, 103), obtaining a match between at least one company profile (200) and at least one influencer profile (300a, 300b, 300c... 300n);
- (106) of sending to the at least one company profile (200) and to the at least one influencer profile (300a,300b,300c... 300n) corresponding to the match of step (105), a request for approval of a promotional campaign;
- (107a) of creating content based on data entered in step (104), if at least one company profile (200) and at least one influencer profile (300a,300b,300c... 300n) approve the request sent in step (106);
- (107b) of carrying a second cross-checking step of at least one company profile (200) with at least one influencer profile (300a,300b,300c... 300n) if the request sent in step (106) has been rejected, excluding the influencer profiles that have not been approved or that did not approve the request in previous step (106);
- (108) of publishing content on at least one social profile of at least one influencer user;
- (109) of verifying the effectiveness of the publishing of content published by each influencer user in step (108) and of storing the data on a server;
- (110) of viewing data relating to pre-established contents of a company on the associated company profile;
- (111) of paying a fee to at least one influencer on whose social profile data within predetermined numerical and qualitative parameters have been verified in step (109).

2. Interconnection method (100) for users and data according to claim 1, **characterized in that** said step (104) of inserting data to be shared in company profile, includes inserting data chosen from the group consisting of: audio-visual messages; photos; information on audience to reach; specifications on products or services to promote; descriptive and temporal information that allows an influencer to create contents of the promotion; customized elements to be included in the contents; number of contents to request; number of influencer to hire; promotional budget; promotional goal; achievable results; payment specifications; location of the promotion.

3. Interconnection method (100) for users and data according to claim 1, **characterized in that** said step (101) consists in acquiring, through an IT platform, data entered by the subjects involved and relating to the subjects themselves, said data being stored in a first database.

4. Interconnection method (100) for users and data according to claim 1, **characterized in that** said step (103) of profiling at least an influencer user comprises requesting for data chosen in the group:
- Number of channels (more than three, two or one);
- Number of contacts in a predefined social media (more than 1 million, between 500 thousand and 1 million, or between 100 thousand and 500 thousand, or between 2 thousand and 100 thousand);
- Area (global, continent, nation or city of reference);
- Reference sector, chosen from a list and compared to an algorithmic analysis of audio-visual messages published, by hashtags, tags, geotags, links, words, emoticons inserted in the contents of influencer's social profile, follower and contents with which the influencer and his followers interact;
- Target audience defined on the basis of parameters of age, sex, location, behavioral, characteristics, average expediture, categories of interest, companies of interest/contact/interaction, target audience;
- Promotional campaign already carried out defined on the basis of parameters including company name, category, time reference, results obtained, budget received, social channel of application, characteristics of reached public;
- Average, individual and overall performance of the social profiles and the respective published content;
- Content that has obtained the best and worst results;
- Overall analysis metrics of promotional effectiveness defined on the basis of parameters including: Percentage of completion, Open rate, Engagement rate, Visibility frequency, Attraction capacity, Traffic generated by the profile, Call to action rate, Skip-rate, Replay- rate, Loss of visibility, Frequency of visibility).

5. Interconnection method (100) for users and data according to claim 1, **characterized in that** said step (102) of profiling at least one company user includes requesting, filling and saving of data chosen in the group consisting in:
- information relating to the company user including: name, billing data, headquarters;
- information relating to at least one reference user of the company profile, said information including: name, surname, email and telephone number;
- Classification of products or services to be proposed based on data of: type of activity, categories connected to the company's activity, distinctive elements of services / products, strengths of services / products, description of services or products of the company;
- area of interest, including city, region / s, nation / s or distance in km from the company headquarters;
- End user target including data relating to: age, sex, location, behavioural characteristics, average expenditure;
- Promotional campaign already carried out, in terms of type, time frame, results obtained, budget invested, impact of the investment on online and offline performance;
- References on the digital presence of the company or company social accounts;
- History of the average performance of the individual social accounts achieved in the last two years and also shown daily;
- Verification of the potential use of activities or tools to alter the performance of the respective social channels;
- Information on local, national and international competitor companies in terms of names, area of expertise, average results, networks, social channels, contents, promotional activities).

6. Interconnection method (100) for users and data according to claim 1, **characterized in that** said step (109) verifying the effectiveness of the publication of content published by each influencer user includes detecting and storing, in real time, data relating to:
- Media content (image or video);
- Copy of the content (text);
- Publication time;
- Number of individual users who viewed the content;
- Number of times the content has been viewed by individual users;
- Public interactions with the content (tap, view profile, click on link, share, save, direct, replies, like / like, comments, calls, emails, clicks on the website, follow, unfollow, follow, unfollow anymore , number of video views, retweets);
- Overall analysis metrics of promotional effectiveness (Percentage of completion, Open rate, Engagement rate, Visibility frequency, Attractiveness, Traffic generated by profile, Call to action rate, Skip-rate, Replay-rate, Loss of visibility, Frequency visibility);
- List of accounts that have interacted with the contents;
- Time flow of the development of previous data (single and aggregate data);
- Comparison of data with those obtained in previous promotions with evidence of the best and worst metrics;
- Channels, contents, times and days of publication that gave the best and worst results;
- Comparison of the data obtained with those of competitors (local, national, international)

7. Interconnection system of users and data able to implement the method (100) according to claim 1, **characterized in** comprising:
- At least one mobile device with internet connection;
- At least one server comprising at least a first and a second database;
- At least one electronic platform configured for the interconnection of users and data accessible through an app installed on at least one mobile device, said electronic platform comprising: at least a first data entry block; at least one section dedicated to a company profile; at least one section dedicated to an influencer profile; at least one match block configured to match at least one company profile with at least one influencer profile; based on data inserted in each respective profiles and through Artificial Intelligence methods; an upload section of at least one promotion; a control panel for the effectiveness of the promotion.
